(19) Europäisches Patentamt
European Patent Office
Office européen des brevets

(11) **EP 4 418 151 A1**

(12) **EUROPEAN PATENT APPLICATION**

(43) Date of publication:
**21.08.2024 Bulletin 2024/34**

(21) Application number: **23156748.8**

(22) Date of filing: **15.02.2023**

(51) International Patent Classification (IPC):
*G06F 18/214* (2023.01)    *G06V 10/25* (2022.01)
*G06V 10/26* (2022.01)    *G06V 10/44* (2022.01)
*G06V 10/764* (2022.01)    *G06V 10/77* (2022.01)
*G06V 10/774* (2022.01)    *G06V 10/82* (2022.01)
*G06V 20/70* (2022.01)    *G06N 3/0455* (2023.01)
*G06N 3/0475* (2023.01)    *G06N 3/0895* (2023.01)
*G06V 20/56* (2022.01)

(52) Cooperative Patent Classification (CPC):
**G06F 18/2155; G06N 3/045; G06N 3/0475;
G06N 3/0895; G06N 3/094; G06V 10/25;
G06V 10/26; G06V 10/454; G06V 10/764;
G06V 10/77; G06V 10/7753; G06V 10/82;
G06V 20/70;** G06V 20/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Huang, Haiwen
72074 Tübingen (DE)**
• **Zhang, Dan
71229 Leonberg (DE)**
• **Geiger, Andreas
72827 Wannweil (DE)**

Remarks:
Amended claims in accordance with Rule 137(2) EPC.

(54) **DEVICE AND METHOD FOR DETERMINING A CLASS FOR AT LEAST A PART OF A DIGITAL IMAGE**

(57) A device and a method for determining a class for at least a part of a digital image, wherein the method comprises providing (202) a classifier for a first class and a second class, determining (206) a digital image comprising an object of the second class in at least the part of the digital image, determining (208) the class for at least the part of the digital image with the classifier, wherein determining (206) the digital image comprises determining the object of the second class with a generative model depending on a label for the first class and/or depending on at least one pixel representing an object of the first class.

Fig. 2

**Description**

Background

The invention relates to a device and a method for determining a class for at least a part of a digital image.
Digital images are processed for object detection and semantic segmentation.
Object detection identifies a category of an object depicted in the digital image. A bounding box describes a part of the digital image. The bounding box localizes an object that is depicted in the part of the digital image. The category may be associated with the pixels forming the object or the bounding box comprising the object.
Semantic segmentation associates a category with pixels in the digital image. Semantic segmentation may be used to recognize a collection of pixels that form a category, e.g. an object or background.
Saito, Kuniaki, et al. "Learning to Detect Every Thing in an Open World." arXiv preprint arXiv:2112.01698 (2021) discloses a method for open-set object detection.

Description of the invention

The method and the device according to the independent claims determine a class for at least a part of a digital image. The class may be associated with a pixel, an object or a bounding box that identifies the part of the digital image. The method for determining the class for at least a part of the digital image comprises providing a classifier for a first class and a second class, determining a digital image comprising an object of the second class in at least the part of the digital image, determining the class for at least the part of the digital image with the classifier, wherein determining the digital image comprises determining the object of the second class with a generative model depending on a label for the first class and/or depending on at least one pixel representing an object of the first class. The resulting digital image comprises a synthesized object of the second class. The class that the classifier determines may be used for training.
The method may comprise training the classifier to determine the second class for the object of the second class in the digital image.
The method may comprise training the classifier to determine the second class for a pixel in the digital images forming at least a part of the object of the second class.
The method may comprise training the classifier to determine the second class for a bounding box in the digital image comprising the object of the second class.
Determining the digital image may comprise replacing or modifying a part of the digital image to form at least the part of the digital image.
The method may comprise determining the part of the digital image with the generative model, in particular from random noise or with latent space interpolation.
The method may comprise training the generative model to synthesize the part of the digital image, in particular from random noise or with latent space interpolation.
The method may comprise determining the part of the digital image with the generative model depending on a predetermined mask, or determining at least the part of the digital image with the generative model depending on a predetermined bounding box. This means, the generative model is utilized to synthesize at least the part of the digital image depending on the predetermined mask or bounding box.
The method may comprise determining the mask identifying the pixels of at least the part of the digital image with the generative model. The generative model is utilized to synthesize the mask.
The method may comprise training the generative model to synthesize at least the part of the digital image depending on the mask or the bounding box.
The device for determining the class for at least a part of a digital image comprises at least one processor and at least one storage, wherein the storage is adapted to store instructions that when executed by the at least one processor cause the at least one processor to perform steps in the method, and wherein the at least one processor is configured to execute the instructions. The device provides advantages that correspond to the advantages of the method.
A program for determining a class for at least a part of a digital image comprises instructions that are executable by at least one processor, wherein the instructions, when executed by the at least one processor, cause the at least one processor to execute the method.
Further advantageous embodiments are derived from the following description and the drawing. In the drawing:

Fig. 1     schematically depicts a device for determining a class for at least a part of a digital image,
Fig. 2     depicts a method for determining a class for at least a part of a digital image.

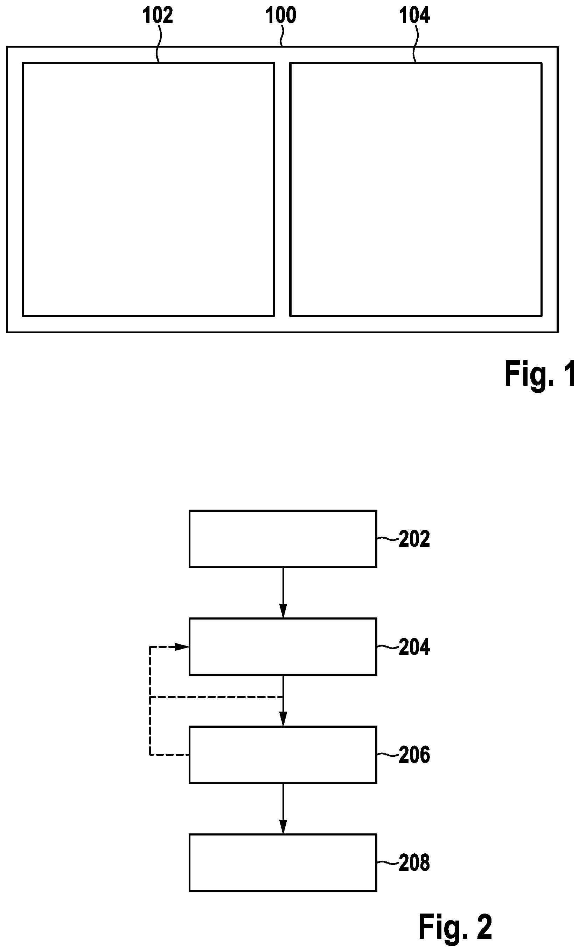

Figure 1 schematically depicts a device 100 for determining a class for at least a part of a digital image.
Digital image in this context may refer to a RGB image or monochrome image.
The device 100 comprises at least one processor 102 and at least one storage 104.
The at least one storage 104 may comprise at least one non-volatile storage. The at least one storage 104 is adapted to store instructions that when executed by the at least one processor 102 cause the at least one processor 102 to execute a method for determining the class.
The at least one processor 102 is configured to execute the instructions.
A program that is executable by the at least one processor 102 may comprise the instructions for determining the class.

The device 100 comprises a classifier. The classifier is implemented as part of the instructions in software, hardware, or partially in software and partially in hardware.

The classifier is configured for at least one class for known objects and a class for novel or unknown objects. For example, the classifier comprises K classification heads for known classes and one classification head for the class for novel or unknown objects.

Examples for a known class are vehicle, pedestrian, traffic sign, and pavement. Other road features may be unknown to the classifier. The classifier is configured to classify the other road features in the class for novel or unknown objects.

The classifier is trained with training data comprising digital images comprising known objects.

The classifier is trained with augmented training data wherein digital images comprise novel or unknown objects.

The device 100 comprises a generative model. The generative model is implemented as part of the instructions in software, hardware, or partially in software and partially in hardware.

The generative model is used to determine the augmented training data from the training data.

For example, the generative model is configured to synthesize a novel object through random noise sampling or latent space interpolation.

For example, the generative model is configured to synthesize at least a part of a digital image depending on a predetermined mask or bounding box.

For example, the generative model is configured to synthesize the mask.

For example, the generative model is pretrained and utilized to synthesize at least a part of a digital image depending on a predetermined mask or bounding box or to synthesize the mask.

The novel object is for example copy-pasted for example randomly into an original image of the training data to create a novel image in the augmented training data having a label for the pasted part that is indicative of the class for novel or unknown objects.

An object in the original image is for example interchanged with the novel object to create a novel image in the augmented training data having a label for the pasted part that is indicative of the class for novel or unknown objects.

For example, the generative model is configured to synthesize a background through random noise sampling or latent space interpolation.

An object in the original image is for example replaced by the background in the original images to create a novel image in the augmented training data having for the pasted part neither a label that is indicative of the class for novel or unknown objects nor a label that is indicative of the class for known objects. This provides a clean background without any object in the area.

The method is described for parts of digital images. A part of the digital image is a pixel, pixel of at least a part of an object or a bounding box comprising an object.

The method is described for a first class and a second class. The first class is used for the known objects. The second class is used for the novel or unknown objects.

The method applies as well to known objects of different known classes. The method may distinguish in this case one class for novel or unknown objects from several different classes for known objects.

The method may classify the part of the digital image for semantic segmentation or object detection. In semantic segmentation either the first class or the second class is assigned to a pixel. In object detection either the first class or the second class is assigned to an object or a bounding box for an object.

The method comprises a step 202.

In the step 202, the classifier for the first class and the second class is provided.

The method comprises a step 204.

In the step 204, the classifier is trained with training data. The training data comprises digital images and a label for the first class that is assigned to objects of the first class.

The method comprises a step 206.

In the step 206, a digital image is determined. The digital image comprises at least one object of the second class.

Determining the digital image may comprise replacing or modifying a part of the digital image. In one example, the digital image is a selected digital image from the training data that is modified. In one example, the digital image is a newly generated digital image.

The part of the digital image is for example determined with the generative model depending on a predetermined mask. The generative model is for example trained to synthesize the part of the digital image depending on the predetermined mask.

The mask may identify the pixels of at least the part of the digital image that shall be replaced or modified. The mask may be determined with the generative model. The generative model may be trained to determine the mask.

The part of the digital image is for example determined with the generative model depending on a predetermined bounding box. The generative model is for example trained to synthesize the part of the digital image depending on the bounding box.

At least the part of the digital image may be determined with the generative model depending on the label for the first class.

At least the part of the digital image may be determined with the generative model depending on at least one pixel representing an object of the first class.

The method may comprise training the generative model to synthesize at least the part of the digital image.

The method may comprise training the generative model to synthesize at least the part of the digital image from random noise. At least the part of the digital image may be determined with the generative model from random noise.

The method may comprise training the generative model to synthesize at least the part of the digital image with latent space interpolation. At least the part of the digital image may be determined with the generative model with latent space interpolation.

The generative model may be trained to synthesize at least the part of the digital image depending on a mask identifying pixels of at least the part of the digital image. The method may comprise determining the mask depending on the digital image.

The step 206 may be repeated to determine different digital images from the same digital image.

The steps 204 and 206 may be repeated to determine different digital images for different digital images.

The step 206 may be repeated to train the classifier with different digital images.

The method comprises a step 208.

In the step 208, the class is determined for at least the part of the digital image.

For example, either the first class or the second class is determined for the part of the digital image. For several classes of known objects, either the one class for novel or unknown objects or one of the several different classes for known objects is determined.

This class is for example determined for a pixel in the digital images forming at least a part of the object of the second class.

The class is for example determined for the object of the second class in the digital image.

The class is for example determined for a bounding box in the digital image comprising the object of the second class.

The method may comprise training the classifier

The method may comprise training the classifier to determine the second class for a pixel in the digital images forming at least a part of the object of the second class.

The method may comprise training the classifier to determine the second class for the object of the second class in the digital image.

The method may comprise training the classifier to determine the second class for a bounding box in the digital image comprising the object of the second class

Training the generative model for generating objects may comprise training the generative model with digital images of a training data set wherein a digital image represents a scene and contains multiple objects.

According to one example, for training the generative model for novel object generation, the training data set is determined that comprises single object images. For example, bounding boxes are determined in the digital image of the training data set wherein the pixels in a bounding box form a single object image.

The mask may be an object mask. The object mask identifies, in particular with a binary value of Zero, a pixel of the digital image or the bounding box not belonging to the single object. The object mask identifies, in particular with a binary value 1, a pixel of the digital image or the bounding box belonging to the single object.

The generative model may be a neural network G that is trained for example with a training data point comprising the single object image and the object mask to synthesize an image I, i.e. the digital image, and an object mask M from in particular random noise z:

$$I, M = G(z)$$

The generative model may be a Projected GAN as disclosed in Axel Sauer, Kashyap Chitta, Jens Müller, Andreas Geiger "Projected GANs Converge Faster" arXiv preprint arXiv:2111.01007.

The Projected GAN may be class-conditional:

$$I, M = G(z, y)$$

with a one-hot encoding vector y to indicate the class identity.

The class-conditional Projected GAN may be used in inference to synthesize new looking images by using an interpolation of a first one-hot encoding vector $y_1$ and a second one-hot encoding vector $y_2$. For example, the vectors $y_1$ and $y_2$ are used to synthesize an image I and an object mask M from in particular random noise z depending on an interpolated encoding vector

$$y = ay_1 + (1 - a)y_2$$

wherein $a \in [0,1]$ is a parameter.

According to one example, for object manipulation within the bounding box, the generative model is a MaskGIT as disclosed in Huiwen Chang, Han Zhang, Lu Jiang, Ce Liu, William T. Freeman "MaskGIT: Masked Generative Image Transformer" arXiv preprint arXiv:2202.04200

The generative model may be pre-trained on single object images. MaskGIT provides a class-conditional image editing and an image painting mode.

According to one example, for manipulating the object in the bounding box, the original object in the bounding box is interchanged with a new object that is synthesized with MaskGIT. According to one example, for manipulating the object in the bounding box, the original object in the bounding box is replaced by a background that is synthesized with MaskGIT.

The augmented training data set is for example determined by determining the digital image as a copy of a digital image from the training data set and pasting a novel object or several novel objects into the digital image. A random number of novel objects may be synthesized and/or pasted into the digital image of the augmented training data set. A novel objects may be pasted at a random location in the digital image of the augmented training data set.

The novel object is in one example synthesized with the generative model. The novel object is in one example determined from an object that is synthesized with the generative model. The novel object may be a resized version of the object that is synthesized with the generative model. The novel object may be determined from the synthesized object using large scale jittering as described in Ghiasi, Golnaz, et al. "Simple copy-paste is a strong data augmentation method for instance segmentation." Proceedings of the IEEE/CVF Conference on Computer Vision and Pattern Recognition. 2021.

After the pasting, the method may comprise removing objects from the digital image of the augmented training data set that are fully occluded. The method may comprise adding a new label identifying the class for novel or unknown objects to the bounding box comprising the novel object. The method may comprise updating the object mask indicating the pixels belonging to the novel object.

The augmented data set is for example determined by randomly selecting a class for a bounding box in the digital image of the training data set, i.e. a ground truth bounding box, and determining the digital image of the augmented training data set with the class-conditional Projected GAN. The bounding box and the label of the bounding box in the digital image of the augmented training data set stays the same after the augmentation.

The augmented training data set is for example determined by using the object mask of the digital image of the training data set for a bounding box in the digital image of the training data set, i.e. a ground truth bounding box, to remove the ground truth object that the ground truth bounding box comprises, and then use the generative model to perform background inpainting to determine the digital image of the augmented training data set.

**Claims**

1. A method for determining a class for at least a part of a digital image, **characterized in that** the method comprises providing (202) a classifier for a first class and a second class, determining (206) a digital image comprising an object of the second class in at least the part of the digital image, determining (208) the class for at least the part of the digital image with the classifier, wherein determining (206) the digital image comprises determining the object of the second class with a generative model depending on a label for the first class and/or depending on at least one pixel representing an object of the first class.

2. The method according to claim 1, wherein the method comprises training (206) the classifier to determine the second class for the object of the second class in the digital image.

3. The method according to claim 1, wherein the method comprises training (206) the classifier to determine the second class for a pixel in the digital image forming at least a part of the object of the second class.

4. The method according to claim 1, wherein the method comprises training (206) the classifier to determine the second class for a bounding box in the digital image comprising the object of the second class.

5. The method according to one of the previous claims, wherein determining (206) the digital image comprises replacing or modifying a part of the digital image to form at least the part of the digital image.

6. The method according to one of the preceding claims, **characterized in that** the method comprises determining (206) the part of the digital image with the generative model, in particular from random noise or with latent space interpolation.

7. The method according to claim 6, **characterized in that** the method comprises training (206) the generative model to synthesize at least the part of the digital image, in particular from random noise or with latent space interpolation or with latent space interpolation.

8. The method according to claim 6 or 7, **characterized in that** the method comprises determining at least the part of the digital image with the generative model depending on a predetermined mask or determining at least the part of the digital image with the generative model depending on a predetermined bounding box.

9. The method according to claim 8, **characterized in that** the method comprises determining (206) the mask identifying the pixels of at least the part of the digital image with the generative model.

10. The method according to claim 8 or 9, **characterized in that** the method comprises training (206) the generative model to synthesize at least the part of the digital image depending on the mask or the bounding box.

11. A device (100) for determining a class for at least a part of a digital image, **characterized in that** the device comprises at least one processor (102) and at least one storage (104), wherein the storage (104) is adapted to store instructions that when executed by the at least one processor (102) cause the at least one processor (102) to execute the method according to one of the claims 1 to 10, and wherein the at least one processor (102) is configured to execute the instructions.

12. A program for determining a class for at least a part of a digital image, **characterized in that** the program comprises instructions that are executable by at least one processor (102), wherein the instructions, when executed by the at least one processor (102), cause the at least one processor (102) to execute the method according to one of the claims 1 to 10.

**Amended claims in accordance with Rule 137(2) EPC.**

1. A method for determining a class for at least a part of a digital image, **characterized in that** the method comprises providing (202) a classifier for a first class and a second class, determining (206) a digital image comprising an object of the second class in at least the part of the digital image, determining (208) the class for at least the part of the digital image with the classifier, wherein determining (206) the digital image comprises determining the object of the second class with a generative model depending on a label for the first class and/or depending on at least one pixel representing an object of the first class, wherein the classifier is configured to use the first class for known objects and the second class for novel or unknown objects, wherein the classifier is configured for the known object vehicle, pedestrian, traffic sign, or pavement, and wherein the classifier is configured to classify other road features in the second class.

2. The method according to claim 1, wherein the method comprises training (206) the classifier to determine the second class for the object of the second class in the digital image.

3. The method according to claim 1, wherein the method comprises training (206) the classifier to determine the second class for a pixel in the digital image forming at least a part of the object of the second class.

4. The method according to claim 1, wherein the method comprises training (206) the classifier to determine the second class for a bounding box in the digital image comprising the object of the second class.

5. The method according to one of the previous claims, wherein determining (206) the digital image comprises replacing or modifying a part of the digital image to form at least the part of the digital image.

6. The method according to one of the preceding claims, **characterized in that** the method comprises determining (206) the part of the digital image with the generative model, in particular from random noise or with latent space interpolation.

7. The method according to claim 6, **characterized in that** the method comprises training (206) the generative model to synthesize at least the part of the digital image, in particular from random noise or with latent space interpolation.

8. The method according to claim 6 or 7, **characterized in that** the method comprises determining at least the part of the digital image with the generative model depending on a predetermined mask or determining at least the part of the digital image with the generative model depending on a predetermined bounding box.

9. The method according to claim 8, **characterized in that** the method comprises determining (206) the mask identifying the pixels of at least the part of the digital image with the generative model.

10. The method according to claim 8 or 9, **characterized in that** the method comprises training (206) the generative model to synthesize at least the part of the digital image depending on the mask or the bounding box.

11. A device (100) for determining a class for at least a part of a digital image, **characterized in that** the device comprises at least one processor (102) and at least one storage (104), wherein the storage (104) is adapted to store instructions that when executed by the at least one processor (102) cause the at least one processor (102) to execute the method according to one of the claims 1 to 10, and wherein the at least one processor (102) is configured to execute the instructions.

12. A program for determining a class for at least a part of a digital image, **characterized in that** the program comprises instructions that are executable by at least one processor (102), wherein the instructions, when executed by the at least one processor (102), cause the at least one processor (102) to execute the method according to one of the claims 1 to 10.

102        100        104

Fig. 1

202

204

206

208

Fig. 2

Europäisches
Patentamt

European
Patent Office

Office européen
des brevets

# EUROPEAN SEARCH REPORT

**Application Number**

EP 23 15 6748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUEFENG DU ET AL: "VOS: Learning What You Don't Know by Virtual Outlier Synthesis", ARXIV.ORG, CORNELL UNIVERSITY LIBRARY, 201 OLIN LIBRARY CORNELL UNIVERSITY ITHACA, NY 14853, 9 May 2022 (2022-05-09), XP091217338, * abstract * * figures 2, 4 * * algorithm 1 * * page 3, paragraph 4 - page 5, paragraph 9 * * page 6, paragraph 2 - paragraph 3 * * page 9, paragraph 2 * ----- | 1,2,4, 6-12 | INV. G06F18/214 G06V10/25 G06V10/26 G06V10/44 G06V10/764 G06V10/77 G06V10/774 G06V10/82 G06V20/70 G06N3/0455 G06N3/0475 G06N3/0895 G06V20/56 |
| X | US 2021/256707 A1 (BROWN MATTHEW ALUN [US] ET AL) 19 August 2021 (2021-08-19) * figures 1-3, 4A-B, 6-8, 13A-C, 14 * * paragraph [0001] * * paragraph [0006] * * paragraph [0027] - paragraph [0036] * * paragraph [0048] - paragraph [0055] * * paragraph [0086] * ----- | 1-5,11, 12 | |
| X | RAKSHITH SHETTY ET AL: "Adversarial Scene Editing: Automatic Object Removal from Weak Supervision", ARXIV.ORG, CORNELL UNIVERSITY LIBRARY, 201 OLIN LIBRARY CORNELL UNIVERSITY ITHACA, NY 14853, 5 June 2018 (2018-06-05), XP080887493, * abstract * * figures 1, 2, 5 * * page 2, paragraph 4 - page 6, paragraph 2 * ----- | 1,11,12 | **TECHNICAL FIELDS SEARCHED (IPC)** G06F G06V G06N |

-/--

The present search report has been drawn up for all claims

| Place of search | Date of completion of the search | Examiner |
|---|---|---|
| The Hague | 26 June 2023 | Konya, Iuliu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches
Patentamt

European
Patent Office

Office européen
des brevets

# EUROPEAN SEARCH REPORT

**Application Number**

EP 23 15 6748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUNDAR AYSEGUL ET AL: "Panoptic-Based Image Synthesis", 2020 IEEE/CVF CONFERENCE ON COMPUTER VISION AND PATTERN RECOGNITION (CVPR), IEEE, 13 June 2020 (2020-06-13), pages 8067-8076, XP033804758, DOI: 10.1109/CVPR42600.2020.00809 [retrieved on 2020-08-03] * abstract * * figures 1, 2, 3, 5, 6 * * page 8071, column 1, paragraph 3 * * page 8074, column 1, paragraph 3 - page 8075, column 2, paragraph 4 * | 1,11,12 | |
| A | US 2022/083807 A1 (ZHANG YUXUAN [CA] ET AL) 17 March 2022 (2022-03-17) * the whole document * | 1-12 | |
| A | ORR ZOHAR ET AL: "PROB: Probabilistic Objectness for Open World Object Detection", ARXIV.ORG, CORNELL UNIVERSITY LIBRARY, 201 OLIN LIBRARY CORNELL UNIVERSITY ITHACA, NY 14853, 2 December 2022 (2022-12-02), XP091385475, * the whole document * | 1-12 | **TECHNICAL FIELDS SEARCHED (IPC)** |

The present search report has been drawn up for all claims

| Place of search | Date of completion of the search | Examiner |
|---|---|---|
| The Hague | 26 June 2023 | Konya, Iuliu |

EPO FORM 1503 03.82 (P04C01)

## ANNEX TO THE EUROPEAN SEARCH REPORT
## ON EUROPEAN PATENT APPLICATION NO.

**EP 23 15 6748**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-06-2023**

| Patent document cited in search report | | Publication date | Patent family member(s) | | Publication date |
|---|---|---|---|---|---|
| US 2021256707 | A1 | 19-08-2021 | US | 2021256707 A1 | 19-08-2021 |
| | | | WO | 2020014294 A1 | 16-01-2020 |
| US 2022083807 | A1 | 17-03-2022 | CN | 115136203 A | 30-09-2022 |
| | | | DE | 112021001762 T5 | 19-01-2023 |
| | | | GB | 2602752 A | 13-07-2022 |
| | | | US | 2022083807 A1 | 17-03-2022 |
| | | | WO | 2022056161 A1 | 17-03-2022 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAITO, KUNIAKI et al.** Learning to Detect Every Thing in an Open World. *arXiv:2112.01698,* 2021

- **GHIASI, GOLNAZ et al.** Simple copy-paste is a strong data augmentation method for instance segmentation. *Proceedings of the IEEE/CVF Conference on Computer Vision and Pattern Recognition,* 2021